(19) Europäisches Patentamt
European Patent Office
Office européen des brevets

(11) **EP 1 744 154 B1**

(12) **EUROPEAN PATENT SPECIFICATION**

(45) Date of publication and mention of the grant of the patent:
**29.05.2019 Bulletin 2019/22**

(51) Int Cl.:
*G01N 27/406* (2006.01)  *G01N 27/417* (2006.01)
*F02D 41/14* (2006.01)

(21) Application number: **06116911.6**

(22) Date of filing: **10.07.2006**

(54) **Gas concentration measuring apparatus designed to establish quick determination of degree of activation of gas sensor**

Gaskonzentrationsmessgerät zur raschen Bestimmung des Aktivationsgrades von Gassensoren

Appareil de mesure de concentration de gaz désigne pour établir la détermination rapide du degré d'activation du capteur de gaz

(84) Designated Contracting States:
**DE FR GB**

(30) Priority: **11.07.2005 JP 2005201121**

(43) Date of publication of application:
**17.01.2007 Bulletin 2007/03**

(73) Proprietor: **DENSO CORPORATION**
**Kariya-city, Aichi-pref., 448-8661 (JP)**

(72) Inventors:
• **Kawase, Tomoo**
**1-1,Showa-cho**
**Kariya-city**
**Aichi 448-8661 (JP)**
• **Kurokawa, Eiichi**
**1-1,Showa-cho**
**Kariya-city**
**Aichi 448-8661 (JP)**

• **Katafuchi, Toru**
**1-1,Showa-cho**
**Kariya-city**
**Aichi 448-8661 (JP)**

(74) Representative: **TBK**
**Bavariaring 4-6**
**80336 München (DE)**

(56) References cited:
**US-A1- 2002 043 460     US-A1- 2002 078 938**
**US-B1- 6 314 790       US-B1- 6 429 410**

• **PATENT ABSTRACTS OF JAPAN vol. 2002, no. 05, 3 May 2002 (2002-05-03) & JP 2002 005882 A (UNISIA JECS CORP), 9 January 2002 (2002-01-09)**

**Description**

BACKGROUND OF THE INVENTION

Technical Field of the Invention

The present invention relates generally to a gas concentration measuring apparatus which may be used in measuring the concentration of a preselected component, such as oxygen, of exhaust emissions of automotive engines, and more particularly to such a gas concentration measuring apparatus capable of determining the degree of activation of a gas sensor quickly with high accuracy.

Background Art

Oxygen sensors (also called A/F sensors) are known which are designed to measure the concentration of oxygen ($O_2$) contained in exhaust emissions of motor vehicle engines to determine an air-fuel ratio of a mixture supplied to the engine. A typical one of the A/F sensors includes a sensor element made up of a solid electrolyte body and a pair of electrodes affixed to the solid electrolyte body. The measurement of concentration of oxygen is achieved by applying the voltage to the solid electrolyte body through the electrodes to produce a flow of electrical current through the sensor element as a function of the concentration of oxygen and sampling the electrical current to determine the A/F ratio.

Sensor elements used in the above type of A/F sensors are typically activated at 700°C to 800°C and enabled to produce an output as a function of an A/F ratio of a mixture supplied to the engine within a wider range from a rich to an extremely lean ratio equivalent in concentration of oxygen to the atmospheric air through the stoichiometric point. The activation of the sensor elements are commonly achieved using an electric heater. When the engine has been started in a cold state, the heater is fully energized to heat the sensor element quickly. Once the sensor element is activated completely, the on-duration of the heater is controlled to keep the temperature of the sensor element constant.

Japanese Patent First Publication No. 2002-5882 teaches how to determine whether the sensor element has been activated completely or not during a rise in temperature thereof based on the impedance of the sensor element. The impedance of the sensor element is known to have a correlation to the temperature of the sensor element. Specifically, as the temperature of the sensor element rises, the impedance thereof drops. The system, as disclosed in the above publication, is designed to determine that the sensor element has been activated completely when the sensor element impedance drops to several tens $\Omega$.

In recent years, the A/F sensors have been developed which produce a desired output within a narrow range defined around the stoichiometric point before the sensor element is activated enough to produce an output as a function of an actual value of the A/F ratio correctly within the wider range. The need to know the completion of activation of the sensor element required to produce the output representing an actual value of the A/F ratio correctly within the narrow range around the stoichiometric point has, therefore, been increased. Such an activated state of the sensor element will also be referred to below as a stoichiometric A/F ratio activated state. For instance, when the impedance of the sensor element drops down to a criterion of, for example, 500 while being heated by the heater, it may be determined that the sensor element has been placed in the stoichiometric A/F ratio activated state or not.

Use of the sensor element impedance in monitoring the stoichiometric A/F ratio activated state of the sensor element, however, encounters the following drawback.

Usually, in the stoichiometric A/F ratio activated state, the sensor element has an impedance of as high as 500 or more, which results in a great variation in sampled value of the sensor element impedance. This will lead to decreased accuracy in monitoring the stoichiometric A/F ratio activated state of the sensor element. This problem may be alleviated by decreasing the criterion by an amount compensating for the variation in sampled value of the sensor element impedance, however, resulting in a delay in determining whether the sensor element has been placed in the stoichiometric A/F ratio activated state or not.

Furthermore, document US 6 314 790 B1 discloses an oxygen concentration detecting apparatus comprising a limit current type oxygen sensor provided in an exhaust system of an internal combustion engine, said sensor having an oxygen concentration detecting element for outputting a limit current proportional to oxygen concentration, and a heater for heating said detecting element, heater control means for controlling energization of said heater to activate said oxygen sensor, fuel varying means for varying fuel supply to said internal combustion engine, and sensor diagnostic means for performing diagnosis of said oxygen sensor in accordance with a change in an output value from said oxygen sensor, said change being caused when said fuel supply is varied by said fuel varying means.

Still further, document US 6 429 410 B1 discloses a circuit for heating a component, wherein heating is maintained at a predefined operating temperature by a resistance heating element. From a determination of the average electrical energy delivered to the resistance heating element, an analysis arrangement concludes that the predefined operating temperature of the component to be heated has been at least approximately reached.

SUMMARY OF THE INVENTION

It is therefore a principal object of the invention to avoid the disadvantages of the prior art.

It is another object of the invention to provide a gas concentration measuring apparatus designed to find the degree of activation of a sensor element quickly and precisely which is required to produce an output representing the concentration of gas component correctly within a narrow range.

According to the invention, this object is achieved by a gas concentration measuring apparatus according to claim 1. Further features and advantageous modifications are shown in the dependent claims.

Typically, a sensor element of the above type works to have an output range of an electric signal which extends as the activation of the sensor element progresses during a rise in temperature of the sensor element from a cold state thereof. The degree of activation (i.e., the temperature) of the sensor element is known to bear a correlation to the impedance of the sensor element. Conventional systems are designed to determine the degree of activation of the sensor element using the sensor element impedance. However, when the sensor element has been activated to a degree required to produce an output representing an actual value of the concentration of the gas component correctly within a range narrower than the measurable range (i.e., a wide range) of the sensor element, it is still impossible to measure the concentration of the gas component correctly over the wide range because of a lack in activation of the sensor element. The sensor element impedance is found to be high and have a great variation, which may result in an error in determining the degree of activation of the sensor element and a delay in such a determination.

The amount of energy inputted to the sensor element by the heat produced by the heat has a strong correlation to the temperature of the sensor element during a warm-up period of the sensor element, thus achieving a quick and precise determination of whether the sensor element has been activated enough to produce an output as a function of an actual value of the concentration of the gas component correctly within the narrow range or not, as. compared with use of the sensor element impedance.

In the preferred mode of the invention, the sensor element activation determining circuit determines an accumulated amount of the electric power supplied to the heater since the heater controller has energized the heater in a cold state as the sensor-inputted energy amount. The sensor element activation determining circuit determines whether the sensor element has been placed in the narrow range activated state or not based on the accumulated amount of the electric power.

The gas sensor may be installed in an exhaust system of an internal combustion engine to measure the concentration of the given gas component that is one of oxygen and another gas component contained in exhaust gas emitted from the engine. In such a case, the gas concentration determining circuit determines an air-fuel ratio of the engine based on the concentration of the given gas component. The narrow range activated state is defined as a stoichiometric A/F ratio activated state that is a state where the sensor element is so activated as to produce the output as a function of an air-fuel ratio of the engine within the narrow range defined around a stoichiometric air-fuel ratio. The sensor element activation determining circuit determines based on the sensor-inputted energy amount whether the sensor element has been placed in the stoichiometric A/F ratio activated state or not.

According to the invention, the sensor element activation determining circuit compares a first and a second criterion with the sensor-inputted energy amount to determine whether the sensor element has been placed in the narrow range activated state or a wider range activated state where the sensor element is so activated as to produce the output as a function of an actual value of the concentration of the given gas component correctly within a wider range that is the given measurable range.

The sensor element activation determining circuit may also measure a sensor element impedance that is an impedance of the sensor element and determines whether the sensor element has been placed in the wider range activated state or not where the sensor element is so activated as to produce the output as a function of an actual value of the concentration of the given gas component correctly within the wider range that is the given measurable range.

The sensor element activation determining circuit may make a first determination of whether the sensor-inputted energy amount meets a given condition or not and a second determination of whether the sensor element impedance meets a given condition or not. The sensor element activation determining circuit may determine hat the sensor element has been placed in the narrow range activated state at a time when it is determined in either of the first or second determination that the given condition is met.

The sensor element activation determining circuit may also determine whether the engine has been restarted before being placed in a cold state or not. When it is determined that the engine has been restarted, the sensor element activation determining circuit may change a criterion used in comparison with the sensor-inputted energy amount to determine whether the sensor element has been placed in the narrow range activated state or not.

When it is determined that the engine has been restarted, the sensor element activation determining circuit may determine based on the sensor element impedance whether the sensor element has been placed in the narrow range activated state or not. When it is determined that the engine has not been restarted, the sensor element activation determining circuit may determine based on the sensor-inputted energy amount whether the sensor element has been placed in the narrow range activated state or not.

The sensor element activation determining circuit may also sample a voltage developed by a power supply working to supply the electric power to the heater through the heater controller. The sensor element activation determination circuit may also work to change a criterion used in comparison with the sensor-inputted energy amount to determine whether the sensor element has been placed in the narrow range activated state or not based on the sampled voltage.

BRIEF DESCRIPTION OF THE DRAWINGS

The present invention will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:

Fig. 1 is a circuit diagram which shows an electric structure of a gas concentration measuring apparatus according to the first embodiment of the invention;

Fig. 2 is a transverse sectional view which shows a sensor element used in the gas concentration measuring apparatus as illustrated in Fig. 1;

Fig. 3 shows an example of an applied voltage-to-output current map for use in determining a target voltage to be applied to the sensor element as illustrated in Fig. 2;

Fig. 4(a) is a graph which shows changes in the temperature and impedance of a sensor element after start-up of an internal combustion engine;

Fig. 4(b) is a graph which shows a change in output of a sensor element representing an air-fuel ratio of a mixture supplied to an engine;

Fig. 5 is a graph which shows a variation in calculated value of the impedance of a sensor element with a change in temperature of the sensor element;

Fig. 6(a) is a graph which demonstrates a change in impedance of a sensor element after start-up of an engine;

Fig. 6(b) is a graph which demonstrates a change in air-fuel ratio calculated based on an A/F output voltage *AFO* in Fig. 1 after start-up of an engine;

Fig. 6(c) a graph which demonstrates a change in accumulated amount of electric power supplied to a heater after start-up of an engine;

Fig. 7 is a flowchart of a program to be executed in the gas concentration measuring apparatus of Fig. 1 to determine the degree of activation of a sensor element;

Fig. 8 is a flowchart of a program to be executed in a gas concentration measuring apparatus of the second embodiment to determine the degree of activation of a sensor element;

Fig. 9 is a partially perspective view which shows a modification of a sensor element;

Fig. 10(a) is a transverse sectional view which shows the second modified form of a sensor element; and

Fig. 10(b) is a transverse sectional view which shows the third modified form of a sensor element.

DESCRIPTION OF THE PREFERRED EMBODIMENTS

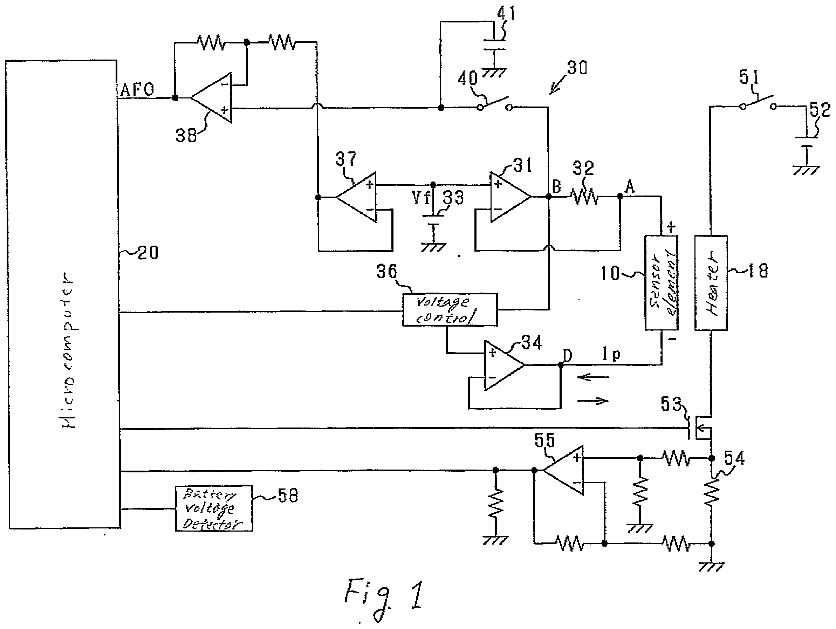

Referring to the drawings, wherein like reference numbers refer to like parts in several views, particularly to Fig. 1, there is shown a gas concentration measuring apparatus designed to measure the concentration of oxygen ($O_2$) contained in exhaust emissions of an automotive engine which is a function of an air-fuel ratio (AFR) of a mixture supplied to the engine. The measured concentration is used in an air-fuel ratio control system implemented by an engine electronic control unit (ECU). The air-fuel ratio control system works to perform a stoichiometric burning control to regulate the air-fuel ratio of the mixture around the stoichiometric air-fuel ratio under feedback control and a lean-burn control to bring the air-fuel ratio to within a given lean range under feedback control.

The gas concentration measuring apparatus includes a microcomputer 20, a sensor control circuit 30, and an oxygen sensor (will be referred to as an air-fuel (A/F) sensor below) which works to produce a current signal as a function of concentration of oxygen contained in exhaust emissions introduced into a gas chamber formed in the A/F sensor.

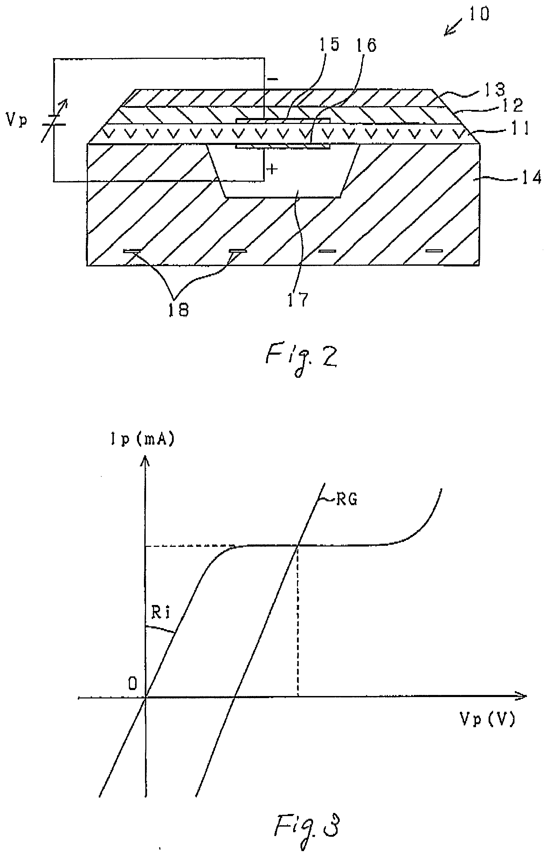

The A/F sensor includes a laminated sensor element 10 which has a sectional structure, as illustrated in Fig. 2. The sensor element 10 has a length extending perpendicular to the drawing surface of Fig. 2 and is, in practice, disposed within a sensor housing and a protective cover. The A/F sensor is installed in an exhaust pipe of the engine. For instance, EPO 987 546 A2, assigned to the same assignee as that of this application teaches a structure and control of an operation of this type of gas sensor in detail.

The sensor element 10 is made up of a solid electrolyte layer 11, a diffusion resistance layer 12, a shielding layer 13, and an insulating layer 14 which are laminated or stacked vertically as viewed in the drawing. The sensor element 10 is surrounded by a protective layer (not shown). The solid electrolyte layer 1 1 is made of a rectangular partially-stabilized zirconia sheet and has upper and lower electrodes 15 and 16 affixed to opposed surfaces thereof. The electrodes 15 and 16 are made of platinum (Pt), for example. The diffusion resistance layer 12 is made of a porous sheet which permits exhaust gasses to flow to the electrode 15. The shielding layer 13 is made of a dense sheet which inhibits the exhaust gasses from passing therethrough. The layers 12 and 13 are each formed using a sheet made of ceramic such as alumina or zirconia and have average porosities, or gas permeability different from each other.

The insulating layer 14 is made of ceramic such as alumina or zirconia and has formed therein an air duct 17 to which the electrode 16 is exposed. The insulating layer 14 has a heater 18 embedded therein. The heater 18 is made of heating wire which is supplied with power from a storage battery installed in the vehicle to heat the whole of the sensor element 10 up to a preselected temperature at which the sensor element 10 is activated enough to produce an output properly. In the following discussion, the electrode 15 will also be referred to as a diffusion resistance layer side electrode, and the electrode 16 will also be referred to as an atmosphere side electrode. The atmosphere side electrode 16 is connected to a positive (+) terminal of a power source, while the diffusion resistance layer side electrode 15 is connected to a negative (-) terminal of the power source.

The exhaust gasses flowing within an exhaust pipe of the engine to which the sensor element 10 is exposed enter and pass through the side of the diffusion resistance layer 12 and reach the diffusion resistance layer side electrode 15. When the exhaust gasses are in a fuel lean state (more oxygen), oxygen molecules contained in the exhaust gasses are decomposed or ionized by application of voltage between the electrodes 15 and 16, so that they are discharged to the air duct 17 through the solid electrolyte layer 1 1 and the electrode 16. This will cause a positive current to flow from the atmosphere side electrode 16 to the diffusion resistance layer side electrode 15. Alternatively, when the exhaust gasses are in a fuel rich state (less oxygen), oxygen molecules contained in air within the air duct 17 are ionized by the electrode 16 so that they are discharged into the exhaust pipe through the solid electrolyte layer 11 and the electrode 15 and undergo catalytic reaction with unburned components such as HC or CO in the exhaust gasses. This will cause a negative current to flow from the diffusion resistance layer side electrode 15 to the atmosphere side electrode 16. The operation of the A/F sensor is well known in the art, and explanation thereof in detail will be omitted here.

Fig. 3 shows a typical voltage-to-current relation (i.e., $V$-$I$ characteristic) of the A/F sensor. A straight segment of a $V$-$I$ curve extending parallel to the abscissa axis (i.e., V-axis) indicate a limiting current range within which the sensor element 10 produces an electric current $Ip$ (i.e., a limiting current) as a function of an air-fuel ratio (i.e., richness or leanness). Specifically, as the air-fuel ratio changes to the lean side, the current $Ip$ produced by the sensor element 10 increases, while as the air-fuel ratio changes to the rich side, the current $Ip$ decreases. The current $Ip$ will also be referred to as a sensor element current below.

A portion of the $V$-$I$ curve lower in voltage than the limiting current range represents a resistance-dependent range. An inclination of a first-order segment of the $V$-$I$ curve depends upon dc internal resistance $Ri$ of the sensor element 10. The dc internal resistance $Ri$ changes with a change in temperature of the sensor element 10. Specifically, it increases with a decrease in temperature of the sensor element 10, so that the inclination of the first-order segment of the $V$-$I$ curve in the resistance-dependent range is decreased. Alternatively, when the temperature of the sensor element 10 rises, it results in a decrease in the dc internal resistance $Ri$, so that the inclination of the first-order segment of $V$-$I$ curve is increased. A line RG indicates a target voltage $Vp$ to be applied to the sensor element 10 (i.e., the electrodes 15 and 16).

Referring back to Fig. 1, the gas concentration measuring apparatus, as described above, includes the sensor control circuit 30 and the microcomputer 20 and works to control an operation of the A/F sensor to determine an air-fuel ratio of a mixture supplied to the engine and also calculate the impedance $Zac$ of the sensor element 10 (which will also be referred to as a sensor element impedance below).

The microcomputer 20 is made of a known arithmetic logic unit consisting of a CPU, memories, A/D converters, and I/O ports and works to sample an analog sensor signal, as produced by the sensor control circuit 30, through the A/D converter to determine the A/F ratio and the sensor element impedance $Zac$. The A/F ratio, as determined by the microcomputer 20, is outputted to the engine ECU (not shown) for use in the air-fuel ratio feedback control.

The sensor control circuit 30 connects with the sensor element 10 through a positive (+) terminal and a negative (-) terminal. The positive terminal leads to the atmosphere side electrode 16 of the sensor element 10, while the negative terminal leads to the diffusion resistance layer side electrode. The sensor control circuit 30 also includes operational amplifiers 31 and 34, a current-measuring resistor 32, a reference voltage source 33, and a voltage application control circuit 36. The positive terminal of the sensor element 10 also connects with the reference voltage circuit 33 through the current-measuring resistor 32 and the operational amplifier 31. The negative terminal also connects with the voltage application control circuit 36 through the operational amplifier 34. The voltage appearing at a junction $A$ of an end of the current-measuring resistor 32 and the positive terminal of the sensor element 10 is kept at the same level as that of the reference voltage source 33 (i.e., a reference voltage $Vf$ of 2.2 V, for example). The sensor element current $Ip$ flows through the current-measuring resistor 32. The voltage appearing at a junction B changes with a change in the sensor element current $Ip$. When the exhaust gas of the engine is in a fuel lean state, that is, the exhaust gas results from burning of a lean mixture, the sensor element current $Ip$ flows from the positive terminal to the negative terminal through the sensor element 10, so that the voltage at the junction *B* rises. Conversely, when the exhaust gas is a fuel rich state, the sensor element current *Ip* flows from the negative terminal to the positive terminal through the sensor element 10, so that the voltage at the junction *B* drops.

The voltage application control circuit 36 works to monitor the voltage at the junction *B* and determine the target voltage *Vp* to be applied to the sensor element 10 as a function of the monitored voltage, for example, by look-up using the target applying voltage line *RG,* as illustrated in Fig. 3. The voltage application control circuit 36 then controls the operational amplifier 34 to bring the voltage at the junction *D* into agreement with the target voltage *Vp*. If it is required only to measure the A/F ratio (i.e., the sensor element current *Ip*) near the stoichiometric one, the voltage application control circuit 36 may keep the voltage to be applied to the sensor element 10 at a constant level.

The sensor control circuit 30 also includes operational amplifiers 37 and 38. The reference voltage source 33 connects with the operational amplifier 37. The operational amplifier 38 serves as a differential amplifier having a given amplification factor to which an output of the operational amplifier 37 and the voltage at the junction *B* are inputted. Specifically, the operational amplifier 38 amplifies a difference between the reference voltage *Vf* and the voltage at the junction *B* and outputs it as an A/F output voltage *AFO* to the microcomputer 20.

The operational amplifier 38 may alternatively be designed to receive the voltages developed at the junctions *A* and *B* in order to amplify the difference between the reference voltage *Vf* and the voltage at the junction *B*. This arrangement, however, encounters the drawback in that the feedback current of the operational amplifier 38 flows through the current-measuring resistor 32, which may lead to an error in determining the A/F ratio. In order to avoid this, the operational amplifier 38 is designed to receive the output of the operational amplifier 37 and the voltage at the junction *B* to have the operational amplifier 37 function as a feedback current absorber in order to maintain the reliability in determining the A/F ratio.

A switch 40 and a capacitor 41 are disposed between the junction B and the operation amplifier 38. When the sensor control circuit is placed in an impedance measuring mode, as will be described later in detail, to measure the sensor element impedance *Zac*, the switch 40 is opened, so that the voltage at the junction *B* is held in the capacitor 41. This avoids an undesirable change in output of the operational amplifier 38 leading to an error in determining the A/F ratio of the engine which arises from a change in voltage applied to the sensor element 10 in an *ac* form in the impedance measuring mode and also ensures the output of the sensor element 10 to determine the A/F ratio immediately before the switch 40 is opened.

The microcomputer 20 analyzes the A/F output voltage *AFO* inputted from the operational amplifier 38 and determines the A/F ratio of the mixture for use in the air-fuel ratio feedback control.

The microcomputer 20 also works to sweep the voltage applied to the sensor element 10 instantaneously in the *ac* form to determine the sensor element impedance *Zac* (i.e., an internal resistance of the sensor element 10) using a resulting change in the current *Ip* flowing through the sensor element 10. Specifically, when the impedance measuring mode is entered, the microcomputer 20 outputs an impedance measuring command signal to the voltage application control circuit 36. The voltage application control circuit 36 then applies the voltage to the sensor element 10 and change it (i.e., the voltage at the junction *D*) in sequence by a given level (e.g., 0.2V) to the positive and negative sides. This causes the sensor element current *Ip* flowing through the sensor element 10 to change, thus resulting in a change in voltage developed at the junction *B*. The microcomputer 20 monitors the change in voltage at the junction *B*, calculates a current change *ΔI* by dividing the monitored change by a resistance value of the current-measuring resistor 32, and divides a change in voltage *ΔV* applied to the sensor element 10 by the current change *ΔI* to determine the sensor element impedance *Zac* ($\square$ *ΔV* / *ΔI*). The determination of the sensor element impedance *Zac* may alternatively be made by supplying the current to the sensor element 10, sweeping it in the *ac* form, and monitoring a resultant change in current or voltage provided by the sensor element 10. US 6,578,563 B2, issued Jun. 17, 2003, assigned to the same assignee as that of this application teaches how to determine the sensor element impedance Zac.

The determination of the sensor element impedance *Zac* is performed at a preselected regular time interval. Specifically, the microcomputer 20, as described above, outputs the impedance measuring command signal to the voltage application control circuit 36 in a given cycle. The microcomputer 20 also works to control an electric power supplied to the heater 18 so as to keep the sensor element impedance *Zac* at a given target value so that the sensor element 10 is held at a selected temperature (e.g., 750°C) to maintain a desired activation status where the sensor element 10 produces an output as a function of the A/F ratio correctly.

The heater 18 connects at an end thereof with a storage battery 52 through an ignition switch 51 of the vehicle and at the other end with ground through a power MOSFET 53 and a heater current measuring resistor 54. The on-off state of the power MOSFET 53 is controlled by the microcomputer 20. The voltage developed across the resistor 54 is inputted to an differential amplifier 55. An output of the differential amplifier 55 is inputted to the microcomputer 20 as a heater current signal as representing the current flowing through the heater 18. Specifically, when the power MOSFET 53 is turned on, it will cause the current to flow through the heater 18, which is measured through the resistor 54.

The microcomputer 20 also connects with a battery voltage detector 58 to detect the voltage developed by the battery 52.

The microcomputer 20 works to control the degree of energization of the heater 10 as a function of the degree of activation of the sensor element 10. Specifically, before the sensor element 10 is activated completely, the microcomputer 20 keeps the power MOSFET 53 turned on to supply full power to the heater 18 to accelerate the activation of the sensor element 10, for example, at the start-up of the engine. After the sensor element 10 is placed in a desired activated state, the microcomputer 20 controls the degree of energization of the heater 18 (i.e., the amount of current supplied to the heater 18) in a feedback mode as a function of a difference between an actual value of the sensor element impedance *Zac* and a target value thereof. For example, the microcomputer 20 determines a duty cycle of an on-off signal inputted to the power MOSFET 53 using PID control techniques.

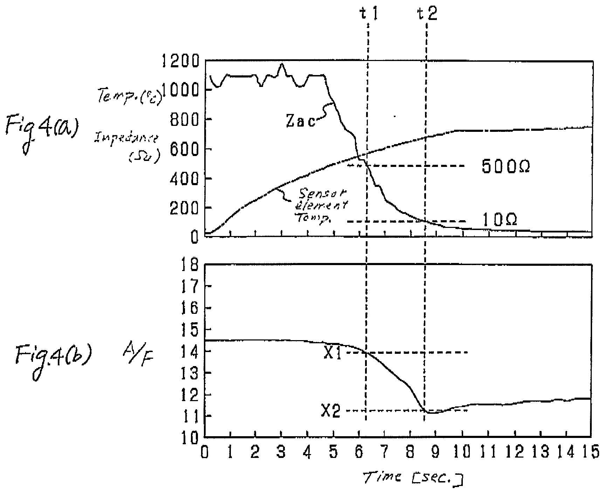

Activation characteristics of the sensor element 10 after a cold start of the engine will be described below using Figs. 4(a) and 4(b).

Fig. 4(a) demonstrates changes in temperature of the sensor element 10 and the sensor element impedance *Zac* just after the start-up of the engine. Fig. 4(b) demonstrates a change in air-fuel ratio, as calculated using the A/F output voltage *AFO* produced by the amplifier 38. In each of Figs. 4(a) and 4(b), an abscissa axis indicates an elapsed time since start-up of the engine. In the shown example, the quantity of fuel supplied to the engine is increased to bring the air-fuel (A/F) ratio to the rich side after the start-up of the engine.

Immediately after the start-up of the engine, the temperature of the sensor element 10 is still low and substantially identical with an ambient temperature. The sensor element impedance *Zac* is 1000Ω or more. As the heater 10 is energized, the temperature of the sensor element 10 rises, while the sensor element impedance *Zac* decreases.

When the engine is still in a cold state, the current hardly flows through the sensor element 10, so that the value of the A/F ratio, as determined using the A/F output voltage *AFO*, is near stoichiometric regardless of the atmosphere of exhaust gas actually emitted from the engine. As the temperature of the sensor element 10 rises, that is, the sensor element impedance *Zac* drops, the calculated value of the A/F ratio becomes identical with an actual value thereof (i.e., a rich A/F ratio in this example) that is a function of the concentration of oxygen in exhaust emissions from the engine. Specifically, as the temperature of the sensor element 10 rises, an air-fuel ratio measurable range of the sensor element 10 extends. At time *t1,* the calculated value of the A/F ratio reaches a stoichiometric activation criterion *X1* (e.g., an A/F ratio of 14) where it represents an actual A/F ratio within a narrow range defined around the stoichiometric correctly. At time *t2*, the calculated value of the A/F ratio reaches a wide range activation criterion *X2* (e.g., an A/F ratio of 11) where it represents an actual A/F ratio correctly over a wide range from a rich to an extremely lean ratio equivalent in concentration of oxygen to the atmospheric air through the stoichiometric. Therefore, a determination of whether the sensor element 10 has been placed in a condition or not where the calculated value of the A/F ratio represents an actual A/F ratio near stoichiometric correctly may be made by determining whether the calculated value of the A/F ratio has reached the stoichiometric activation criterion *X1* or not.

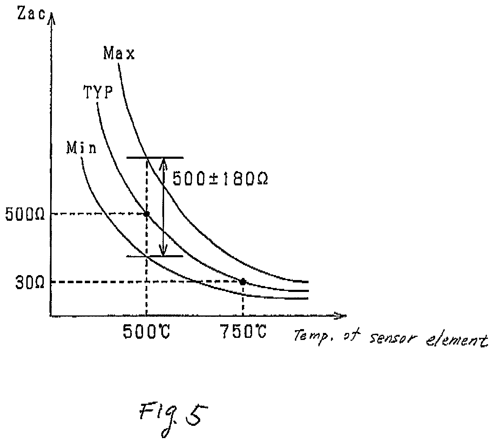

Some of prior art systems are designed to monitor the activated state of the sensor element 10 based on the sensor element impedance *Zac*. Specifically, when the sensor element impedance *Zac* drops to approximately 500 Ω with a rise of the temperature of the sensor element 10, the system determines that the sensor element 10 has been activated enough to produce an output representing an actual A/F ratio near stoichiometric correctly (at or near time *t1*). When the sensor element impedance *Zac* drops to approximately several tens Ω, the system determines that the sensor element 10 has been activated to permit the A/F ratio to be calculated correctly over the wide range (at or near time *t2*). However, at time *t1* when the sensor element impedance *Zac* drops to approximately 500Ω, the impedance of the sensor element 10 is usually high and subjected to a great variation, thus resulting in a great variation in calculated value of the sensor element impedance *Zac.* Fig. 5 demonstrates relations between the sensor element impedance *Zac* and the temperature of the sensor element 10. The graph shows that when *Zac* = 500 Ω, the calculated value of the sensor element impedance *Zac* undergoes a variation over a range of ± 180 Ω across a typical value *TYP.* Such a variation in the calculated value of the sensor element impedance *Zac* will result in an error in determining whether the sensor element 10 has been activated enough to produce an output representing an actual A/F ratio near stoichiometric correctly or not (this determination will also be referred to as a stoichiometric activation determination below). Eliminating such an error requires the system to make the determination when the calculated value of the sensor element impedance *Zac* drops to approximately 320Ω(=500Ω-180Ω), which results in a undesirable delay of the determination. The inventors of this application have found that the stoichiometric activation determination when the calculated value of the sensor element impedance *Zac* has reached 320 Ω usually experiences a delay of approximately one (1) sec. as compared with that when the calculated value of the sensor element impedance *Zac* has reached 500Ω.

In order to alleviate the above problem, the microcomputer 20 is designed to use the amount of electric power supplied to the heater 18 as a parameter for the stoichiometric activation determination on conditions that the thermal energy of the sensor element 10 installed in the exhaust pipe of the engine through a sensor holder or housing bears a relation (1) below, and a change in temperature of the sensor element 10 per unit time is determined using the relation (1).

$$cM \frac{dTu}{dt} = S \cdot \mathrm{Re}^{m} \cdot (Te - Tu) - B(Tu - Ta) + Q \qquad (1)$$

where $cM$ is the thermal capacity of the sensor element 10, $Tu$ is the temperature of the sensor element 10, $Te$ is the temperature of exhaust gas to be measured by the sensor element 10, $Ta$ is the outside air temperature, $S$ is the area of a surface of the sensor element 10, $Re$ is the coefficient of heat transfer of the sensor element 10, $B$ is the coefficient of heat transfer of an outside portion of the A/F sensor exposed outside the exhaust pipe, and $Q$ is the electric power supplied to the heater 18. The coefficient of heater transfer $Re$ is given by a relation of $Re = Ue \square Du/v$ where $Ue$ is the flow rate of the exhaust gas within the exhaust pipe, $Du$ is a representative length of the sensor element 10, and $v$ is the coefficient of kinematic viscosity. The first term of the right side of the equation (1) represents the quantity of heat of the exhaust gas received by the sensor element 10 or a loss of heat of the sensor element 10 to the exhaust gas. The second term represents the quantity of heat dissipated from a sensor holder (i.e., a housing in which the sensor element 10 is installed) to the air. The third term represents the quantity of heat produced by the heater 18.

Usually, during a rise in temperature of the sensor element 10 after a cold start of the engine, the quantity of heat dissipating from or inputted to the sensor element 10 is considered to hardly change, and the quantity of heat emitting from the sensor holder is also considered to be almost zero. Specifically, the first and second terms of the right side of the equation (1) may be ignored. Therefore, during a warm-up period of the sensor element 10, a change in temperature of the sensor element 10 per unit time may be considered to depend upon the quantity of heat produced by the heater 18 (i.e., an electric power $Q$ supplied to the heater 18). It is, thus, possible to make the stoichiometric activation determination using the quantity of heat produced by the heater 18.

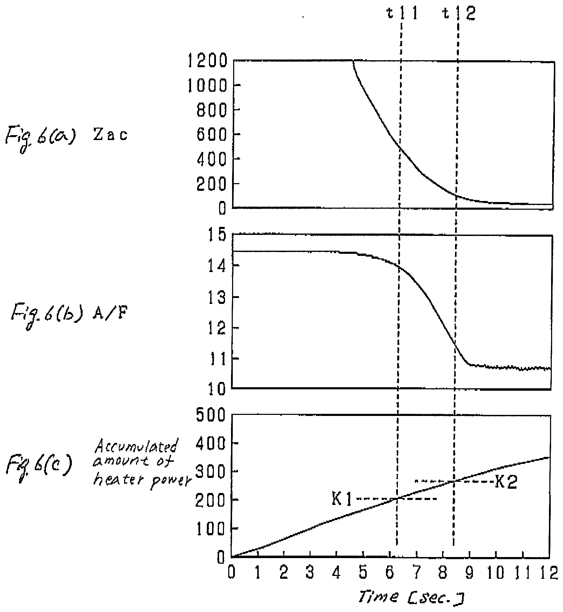

Figs. 6(a) to 6(c) demonstrate changes in the sensor element impedance $Zac$, the A/F ratio calculated based on the A/F output voltage $AFO$, and the accumulated amount of electric power supplied to the heater 18 after the start-up of the engine, respectively. In each of Figs. 6(a) to 6(c), the axis of abscissa indicates the elapsed time since the start-up of the engine.

Figs. 6(a) to 6(c) show that, after start-up of the engine, the sensor element impedance $Zac$ decreases, thereby resulting in a shift in the A/F ratio to the fuel rich side, and the accumulated amount of electric power increases gradually. When the accumulated amount of electric power supplied to the heater 18 reaches a stoichiometric activation criterion $K1$ at time $t11$, it may be determined that the sensor element 10 has been activated enough to produce an output representing an actual A/F ratio near stoichiometric (i.e., the narrow range) correctly. Afterwards, when the accumulated amount of electric power supplied to the heater 18 reaches a wide range activation criterion $K2$ at time $t22$, it may be determined that the sensor element 10 has been activated enough to produce an output representing an actual A/F ratio correctly in the wide range, as described above.

The inventors of this application have found that the quantity of energy inputted to the sensor element 10 by heat produced by the heater 18 depends upon the voltage developed by a power supply (i.e., the battery 52). It is, thus, preferable that the stoichiometric activation criterion $K1$ and the wide range activation criterion $K2$ be corrected so as to compensate for an error in determining the accumulated amount of electric power supplied to the heater 18. For example, as the voltage of the battery 52 drops, the criteria $K1$ and $K2$ may be increased, while it rises, the criteria $K1$ and $K2$ may be decreased.

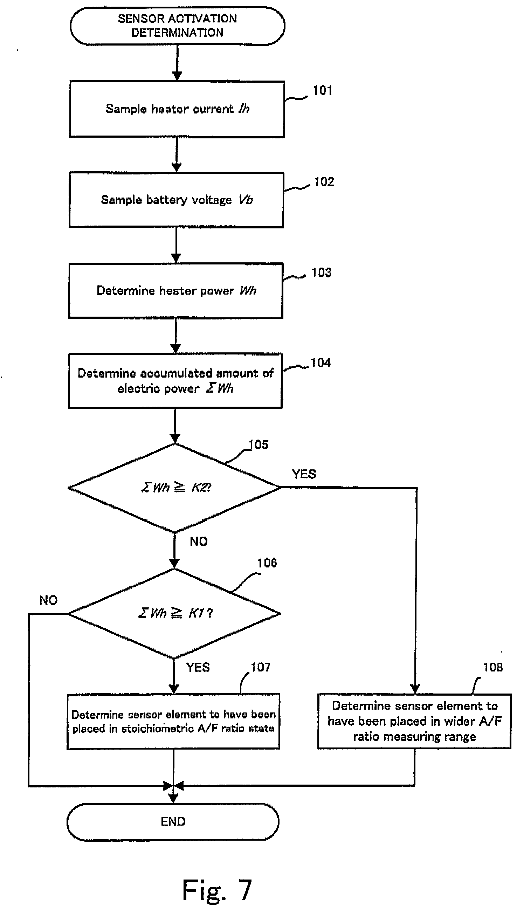

Fig. 7 is a flowchart of a sequence of logical steps or program to be executed by the microcomputer 20 at a time interval (e.g., 10msec.) to determine whether the sensor element 10 has been placed in a desired activated state or not.

After entering the program, the routine proceeds to step 101 wherein a heater current $Ih$ is sampled. The heater current $Ih$ is the current flowing through the heater 18 when energized which is measured through the heater current measuring resistor 54.

The routine proceeds to step 102 wherein an output of the battery voltage detector 58 is sampled to determine a battery voltage $Vb$ that is the voltage developed by the battery 52 and equivalent to the voltage appearing across the heater 18. The routine proceeds to step 103 wherein a heater power $Wh$ that is the amount of electric power supplied to the heater 18 is calculated using the heater current $Ih$ and the battery voltage $Vb$ according to a relation of $Wh = Ih \square Vb$.

The routine proceeds to step 104 wherein an accumulated amount of electric power $\Sigma Wh$ supplied to the heater 18 since the start-up of the engine is calculated according to a relation of $\Sigma Wh(i) = \Sigma Wh(i-1) + Wh$.

The routine proceeds to step 105 wherein it is determined whether the accumulated amount of electric power $\Sigma Wh$, as calculated in step 104, is greater than or equal to the wide range activation, criterion $K2$ or not. If a NO answer is obtained, then the routine proceeds to step 106 wherein the accumulated amount of electric power $\Sigma Wh$ is greater than or equal to the stoichiometric activation criterion $K1$ or not. If a NO answer is obtained (i.e., $\Sigma Wh < K1$), then the routine terminates. Alternatively, if a YES answer is obtained (i.e., $K1 \leqq \Sigma Wh < K2$), then the routine proceeds to step 107 wherein it is determined that the sensor element 10 has been activated enough to produce an output representing an actual A/F ratio near stoichiometric correctly.

If a YES answer is obtained in step 105 (i.e., $\Sigma Wh \geqq K2$), then the routine proceeds to step 108 wherein it is determined that the sensor element 10 has been activated enough to produce an output representing an actual A/F ratio correctly in the wider range.

As apparent from the above discussion, the gas concentration measuring apparatus of this embodiment is designed to monitor the quantity of electric power supplied to the heater 18 to determine whether the sensor element 10 has been activated enough to produce an output representing an actual A/F ratio near stoichiometric correctly or not. This results in improved accuracy in determining whether the sensor element 10 has been placed in a stoichiometric A/F ratio activated state or not where an output of the sensor element 10 represents an A/F ratio near stoichiometric correctly and a decreased time required for such a determination as compared with use of the sensor element impedance $Zac$.

If the impedance characteristics of the sensor element 10 have changed due to aging thereof, it will result in an increased value of the sensor element impedance $Zac$ when the sensor element 10 has been activated enough to produce an output representing a stoichiometric A/F ratio correctly. Use of the sensor element impedance $Zac$ will, therefore, result in an increased time required to determine whether the sensor element 10 has been placed in the stoichiometric A/F ratio activated state or not. The use of the accumulated amount of electric power supplied to the heater 18 after the start-up of the engine, however, eliminates such a problem.

The gas concentration measuring apparatus according to the second embodiment will be described below which is designed to determine whether the sensor element 10 has been placed in the stoichiometric A/F ratio activated state or not correctly upon restart of the engine before being cold.

Usually, when the engine is restarted, the sensor element 10 is relatively warm, so that it is still activated completely or near completely, not requiring much time to activate the sensor element 10. In this case, use of the accumulated amount of electric power supplied to the heater 18 will result in a delay in determining whether the sensor element 10 has been activated or not as compared with use of the sensor element impedance $Zac$. In order to alleviate this problem, the microcomputer 20 of this embodiment is designed to determine whether the sensor element 10 has been placed in the stoichiometric A/F ratio activated state or not using the accumulated amount of electric power $\Sigma Wh$ or the sensor element impedance $Zac$ whichever enables an earlier determination of whether the sensor element 10 has been placed in the stoichiometric A/F ratio activated state or not.

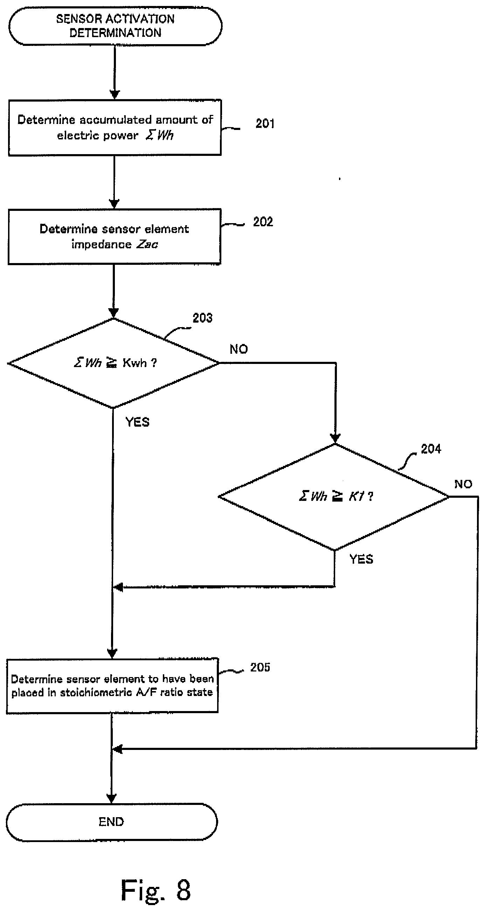

Fig. 8 is a flowchart of a program to be executed by the microcomputer 20 in the second embodiment at a given time interval to monitor the activation of the sensor element 10 to determine whether the sensor element 10 has been placed in the stoichiometric A/F ratio activated state or not.

After entering the program, the routine proceeds to step 201 wherein the accumulated amount of electric power $\Sigma Wh$ supplied to the heater 18 since the start-up of the engine is calculated in the same manner as described in the first embodiment.

The routine proceeds to step 202 wherein the sensor element impedance $Zac$ is determined. Specifically, the microcomputer 20 controls the voltage application control circuit 36.to apply the voltage to the sensor element 10 and change it by a given level (e.g., 0.2V) to the positive and negative sides. The microcomputer 20 then monitors the change in voltage at the junction $B$, calculates a current change $\Delta I$ by dividing the monitored change by a resistance value of the current-measuring resistor 32, and divides a change in voltage $\Delta V$ applied to the sensor element 10 by the current change $\Delta I$ to determine the sensor element impedance $Zac$ ($\Box \Delta V / \Delta I$).

The routine proceeds to step 203 wherein it is determined whether the accumulated amount of electric power $\Sigma Wh$, as calculated in step 201, is greater than or equal to a stoichiometric activation power criterion $Kwh$ or not. The criterion $Kwh$ may be identical with the stoichiometric activation criterion $K1$, as employed in the first embodiment. If a NO answer is obtained in step 203, then the routine proceeds to step 204 wherein it is determined whether the sensor element impedance $Zac$ is smaller than a stoichiometric activation impedance criterion $Kzac$ or not. If a YES answer is obtained in step 203 (i.e., $\Sigma Wh \geqq Kwh$) or a YES answer is obtained in step 204 (i.e., Zac < $Kzac$), then the routine proceeds to step 205 wherein it is determined that the sensor element 10 has been activated enough to produce an output representing an actual A/F ratio near stoichiometric correctly.

Specifically, when the engine has been restarted, the routine proceeds to step 204 through step 203, that is, the condition of $Zac < Kzac$ has been met earlier than the condition of $\Sigma Wh \geqq Kwh$, thereby enabling an earlier determination of whether the sensor element 10 has been placed in the stoichiometric A/F ratio activated state or not.

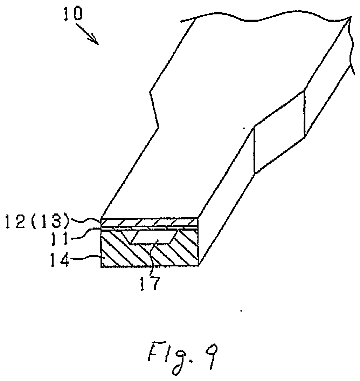

Fig. 9 shows a modified form of the sensor element 10 which is designed to have a reduced volume for achieving quick activation thereof. The same reference numbers as employed in Fig. 2 will refer to the same parts.

The sensor element 10 includes a thin top portion which has a reduced width and is sensitive to the exhaust gas of the engine. The air duct 17 has a decreased volume, thus requiring the need for decreasing the sensor element current $Ip$ to ensure a measurable limitation on the fuel rich side. This, however, results in an increased value of the sensor element impedance $Zac$ when the degree of activation of the sensor element 10 is the same as that in the structure of Fig. 2. The stoichiometric activation impedance criterion $Kzac$ used in determining whether the sensor element 10 has been placed in the stoichiometric A/F ratio activated state or not, therefore, needs to be set to approximately 900 Ω, thus resulting in an increased variation in value of the sensor element impedance *Zac* (about ±350Ω) which leads to a greater error in monitoring the activation of the sensor element 10 using the sensor element impedance *Zac*. This problems is, as described above, mitigated or obviated by using the accumulated amount of electric power *ΣWh*.

The determination of whether the sensor element 10 has been activated enough to an output representing an actual A/F ratio correctly over the wider range or not may alternatively be made using the sensor element impedance *Zac*.

Usually, the temperature of the sensor element 10 in a cold state and the rate at which the temperature of the sensor element 10 rises are known to depend upon environmental factors such as the outside air temperature. The microcomputer 20 may alternatively be designed to correct the stoichiometric activation criterion *K1* or the stoichiometric activation power criterion *Kwh* to compensate for an error arising from the outside air temperature.

The microcomputer 20 may be designed to determine whether the engine has been restarted before becoming cold or not and, if so, correct the stoichiometric activation criterion *K1* or the stoichiometric activation power criterion *Kwh*. For instance, the stoichiometric activation criterion *K1* or the stoichiometric activation power criterion *Kwh* may be changed to a smaller value to improve the accuracy in monitoring the stoichiometric A/F ratio activated state of the sensor element 10.

The determination of whether the engine has been restarted or not may be made by measuring the length of time the engine is at rest using a soak timer or the temperature of an engine coolant.

The microcomputer 20 may also be designed to determine whether the sensor element 10 has been placed in the stoichiometric A/F ratio activated state or not using the sensor element impedance Zac when it is determined that the, engine has been restarted or using the accumulated amount of electric power *ΣWh* when it is determined that the engine has not been restarted.

The sensor control circuit 30 in each of the first and second embodiments may alternatively be used with a gas sensor equipped with a laminate of a plurality of solid electrolyte layers or a cup-shaped sensor element.

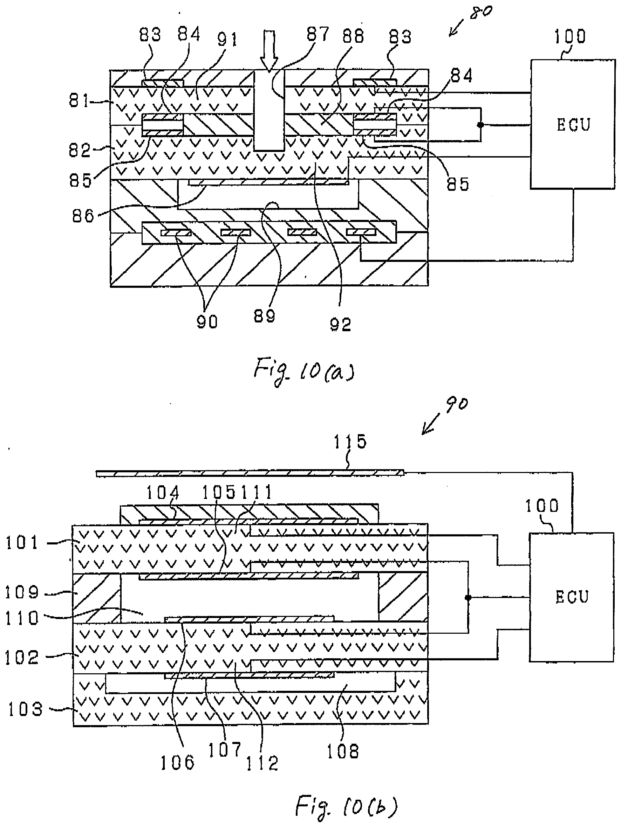

Fig. 10(a) shows a sensor element 80 which may be employed in each of the first and second embodiments.

The sensor element 80 includes a laminate of two solid electrolyte layers 81 and 82. The solid electrolyte layer 81 has electrodes 83 and 84 affixed to opposed surfaces thereof. Similarly, the solid electrolyte layer 82 has electrodes 85 and 86 affixed to opposed surfaces thereof. Each of the electrodes 83, 84, and 85 is viewed in the drawing as being made up of right and left separate parts, but, it is, in practice, formed by a single plate having a connecting portion (not shown) extending in a transverse direction in the drawing.

The solid electrolyte layer 81 and the electrodes 83 and 84 constitute a pump cell 91. The solid electrolyte layer 82 and the electrodes 85 and 66 constitute an oxygen sensor cell 92. The electrodes 83 to 86 are joined to the sensor control circuit 30 which leads to the microcomputer 20 illustrated in Fig. 1.

The sensor element 80 also includes a gas inlet 87 through which exhaust gasses of the automotive engine enter and a porous diffusion layer 88, an air duct 89, and a heater 90. The structure and operation of this type of sensor element are disclosed in, for example, US 6,295,862 B1, assigned to the same assignee as that of this application. The oxygen senor cell 92 is generally also called an electromotive force cell or an oxygen concentration sensor cell.

The oxygen sensor cell 92 works to produce an electromotive force which has one of two discrete values (e.g., OV and 0.9V) selectively as a function of whether the exhaust gasses are on the rich side or the lean side of a stoichiometric point corresponding to a stoichiometric air-fuel ratio of mixture supplied to the engine. When the exhaust gasses are on the lean side, the oxygen sensor cell 92 produces a lower electromotive force. Conversely, when the exhaust gasses are on the rich side, the oxygen sensor cell 92 produces a higher electromotive force. The sensor control circuit 30 works to control the voltage applied to the pump cell 91 so that an electromotive force produced by the oxygen sensor cell 92 is kept at 0.45V which corresponds to the stoichiometric point.

Fig. 10(b) shows a sensor element 90 which may be used in each of the first and second embodiments.

The sensor element 90 includes three solid electrolyte layers 101, 102, and 103. The solid electrolyte layer 101 has electrodes 104 and 105 affixed to opposed surfaces thereof. Similarly, the solid electrolyte layer 102 has electrodes 106 and 107 affixed to opposed surfaces thereof. The solid electrolyte layer 101 and the electrodes 104 and 105 form a pump cell 111. The solid electrolyte layer 102 and the electrodes 106 and 107 form an oxygen sensor cell 112. The solid electrolyte layer 103 forms a wall defining an oxygen reference chamber 108. The sensor element 90 also includes a porous diffusion layer 109, a gas chamber 110 into which exhaust gasses of the automotive engine enter, and a heater 115. The oxygen sensor cell 112 operates, like the oxygen sensor cell 92 illustrated in Fig. 10(a), as an electromotive force cell or an oxygen concentration sensor cell.

The gas concentration measuring apparatus, as described in each of the above embodiments, may be used with a composite gas concentration measuring sensor which includes first and second cells made of a solid electrolyte body. The first cell works as a pump cell to pump oxygen molecules out of or into a first gas chamber formed in a sensor body and output a signal indicative of the concentration of the pumped oxygen molecules. The second cell works as a sensor cell to produce a signal indicative of the concentration of a preselected component of gasses flowing into a second gas chamber from the first gas chamber. For example, the composite gas concentration measuring sensor may be used to measure the concentration NOx contained in exhaust gasses of the automotive engine. The microcomputer 20 may work to determine whether either or both of the first and second the second cell have been placed in the stoichiometric A/F ratio activated state or not using the accumulated amount of electric power $\Sigma Wh$.

Further, the composite gas concentration measuring sensor may be designed to have a third cell serving as a monitor cell or a second pump cell to produce an electromotive force as a function of concentration of oxygen molecules remaining in the second gas chamber.

The gas concentration measuring apparatus may alternatively be designed to measure the concentration of HC or CO contained in the exhaust gasses of the automotive engine. The measurement of concentration of HC or CO is achieved by pumping excessive oxygen ($O_2$) out of the first gas chamber using the pump cell and decomposing HC or CO contained in the gasses entering the second gas chamber using the sensor cell to produce an electric signal indicative of the concentration of HC or CO.

The A/F sensor used in the above embodiments may alternatively be designed to develop an electromotive force between the electrodes of the sensor element as a function of concentration of NOx or CO containing an oxygen component. Specifically, one of the electrodes works to ionize NOx or CO to produce oxygen ions. When a difference in oxygen partial pressure between sides of the solid electrolyte body is created, it will cause the electromotive force to be produced as a function of such a difference according to the Nernst's equation.

While the present invention has been disclosed in terms of the preferred embodiments in order to facilitate better understanding thereof, it should be appreciated that the invents can be embodied in various ways without departing from the principle of the invention. Therefore, the invention should be understood to include all possible embodiments and modifications to the shown embodiments witch can be embodied without departing from appended claims.

A gas concentration measuring system for use in air-fuel ratio control of motor vehicle engines is provided which is designed to determine the concentrations of oxygen as a function of an air-fuel ratio of a mixture supplied to the engine through a sensor element. The sensor element is activated by heat produced by an electric heater. The system works to sample the accumulated amount of energy inputted to the sensor element by the heat produced by the heater to determine whether the sensor element has been activated enough to produce an output representing an actual value of the air-fuel ratio correctly or not. Use of the accumulated amount of energy inputted to the sensor element will result in a decreased time required for such a determination as compared with the impedance of the sensor element.

**Claims**

1. A gas concentration measuring apparatus having a gas sensor that is installable in an exhaust system of an internal combustion engine to measure the concentration of the given gas component that is one of oxygen and another gas component contained in exhaust gas emitted from the engine, and being designed to sample an output of the gas sensor which includes a sensor element (**10**) made of a solid electrolyte body (**11**) working to produce the output in the form of an electric signal as a function of concentration of a given gas component within a given measurable range, comprising:

 a heater (**18**) designed to be supplied with electric power to heat the sensor element;
 a heater controller (**20**) working to control a supply of the electric power to said heater to heat the sensor element (**10**) up to a desired temperature at which the sensor element (**10**) is activated; and
 a gas concentration determining circuit designed to sample the output, as produced by the sensor element (**10**) of the gas sensor, to determine the concentrations of the given gas component,
 **characterized by**
 a sensor element activation determining circuit working to determine a sensor-inputted energy amount ($\Sigma$ Wh) that is an amount of energy inputted to the sensor element (**10**) by heat produced by said heater (**18**), said sensor element activation determining circuit also working to determine based on the sensor-inputted energy amount whether the sensor element (**10**) has been placed in an activated state or not of a narrow range defined within the given measurable range, by comparing a first criterion (K1) and a second criterion (K2) with the sensor-inputted energy amount ($\Sigma$ Wh), wherein
 it is determined that the sensor element (**10**) has been placed in the narrow range activated state when K1 $\leqq$ $\Sigma$Wh < K2, and
 it is determined that the sensor element (**10**) has been placed in the wider range activated state when $\Sigma$Wh $\geqq$ K2, wherein the sensor element activation determining circuit is configured to,
 when it is determined that the sensor element (**10**) has been placed in the narrow range activated state, to determine that the sensor element (**10**) is so activated as to produce the output as a function of an actual value of the concentration of the given gas component correctly within the narrow range, and
 when it is determined that the sensor element (**10**) has been placed in the wider range activated state, to determine that the sensor element (**10**) is so activated as to produce the output as a function of an actual value of the concentration of the given gas component correctly within a wider range that is the given measurable range, and

wherein the sensor element (**10**) is made of a laminate of the solid electrolyte body (**11**) and the heater (**18**).

2. A gas concentration measuring apparatus as set forth in claim 1, wherein said sensor element activation determining circuit determines an accumulated amount of the electric power supplied to said heater (**18**) since said heater controller (**20**) has energized said heater (**18**) in a cold state as the sensor-inputted energy amount, said sensor element activation determining circuit determining whether the sensor element (**10**) has been placed in the narrow range activated state or not based on the accumulated amount of the electric power.

3. A gas concentration measuring apparatus as set forth in claim 1, wherein said gas concentration determining circuit determines an air-fuel ratio of the engine based on the concentration of the given gas component, wherein the narrow range activated state is a stoichiometric A/F ratio activated state that is a state where the sensor element is so activated as to produce the output as a function of an air-fuel ratio of the engine within the narrow range defined around a stoichiometric air-fuel ratio, and wherein said sensor element activation determining circuit determines based on the sensor-inputted energy amount whether the sensor element has been placed in the stoichiometric A/F ratio activated state or not.

4. A gas concentration measuring apparatus as set forth in claim 1, wherein said sensor element activation determining circuit also determines whether the engine has been restarted before being placed in a cold state or not, and wherein when it is determined that the engine has been restarted, said sensor element activation determining circuit changes a criterion used in comparison with the sensor-inputted energy amount to determine whether the sensor element (**10**) has been placed in the narrow range activated state or not.

5. A gas concentration measuring apparatus as set forth in claim 1, wherein said sensor element activation determining circuit works to determine whether the engine has been restarted before being placed in a cold state or not and also measure a sensor element impedance that is an impedance of the sensor element (**10**), and wherein when it is determined that the engine has been restarted, said sensor element activation determining circuit determines based on the sensor element impedance whether the sensor element (**10**) has been placed in the narrow range activated state or not, when it is determined that the engine has not been restarted, said sensor element activation determining circuit determining based on the sensor-inputted energy amount whether the sensor element (**10**) has been placed in the narrow range activated state or not.

6. A gas concentration measuring apparatus as set forth in claim 1, wherein said sensor element activation determining circuit also samples a voltage developed by a power supply working to supply the electric power to said heater (**18**) through said heater controller (**20**), and wherein said sensor element activation determination circuit also works to change a criterion used in comparison with the sensor-inputted energy amount to determine whether the sensor element (**10**) has been placed in the narrow range activated state or not based on the sampled voltage.

**Patentansprüche**

1. Gaskonzentrationsmessvorrichtung mit einem Gassensor, der in einem Abgassystem einer Brennkraftmaschine installierbar ist, zum Messen der Konzentration der vorgegebenen Gaskomponente, die Sauerstoff oder eine andere Gaskomponente ist, die in dem von der Maschine emittierten Abgas enthalten ist, und angepasst ist, um einen Ausgabe des Gassensors abzutasten, der ein Sensorelement (10) beinhaltet, das aus einem Festelektrolytkörper (11) besteht, der die Funktion hat, die Ausgabe in der Form eines elektrischen Signals als eine Funktion einer Konzentration einer vorgegebenen Gaskomponente innerhalb eines vorgegebenen messbaren Bereichs zu erzeugen, mit:

einer Heizeinrichtung (18), die angepasst ist, mit elektrischer Energie versorgt zu werden, um das Sensorelement zu erwärmen;
einer Heizeinrichtungssteuerung (20) zum Steuern einer Zufuhr von elektrischer Energie zu der Heizeinrichtung zum Erwärmen des Sensorelements (10) auf eine gewünschte Temperatur, bei der das Sensorelement (10) aktiviert wird; und
einer Gaskonzentrationsbestimmungsschaltung, die angepasst ist, das Ausgangssignal abzutasten, wie es durch das Sensorelement (10) des Gassensors erzeugt wird, zum Bestimmen der Konzentrationen der vorgegebenen Gaskomponente,
**gekennzeichnet durch**
eine Sensorelementaktivierungsbestimmungsschaltung zum Bestimmen einer in den Sensor eingegebenen Energiemenge ($\Sigma$ Wh), die eine in das Sensorelement (10) durch die von der Heizeinrichtung (18) erzeugte Wärme eingegebene Energiemenge ist, wobei die Sensorelementaktivierungsbestimmungsschaltung ebenso fugiert, um auf der Grundlage der in den Sensor eingegebenen Energiemenge zu bestimmen, ob das Sensorelement (10) in einen aktivierten Zustand eines definierten engen Bereichs innerhalb des vorgegebenen messbaren Bereichs versetzt wurde oder nicht, durch Vergleichen eines ersten Kriteriums (K1) und eines zweiten Kriteriums (K2) mit der in den Sensor eingegebenen Energiemenge ($\Sigma$ Wh), wobei

bestimmt wird, dass das Sensorelement (10) in den aktivierten Zustand des engen Bereichs versetzt wurde, wenn K1 $\leq$ $\Sigma$Wh < K2, und

bestimmt wird, dass das Sensorelement (10) in den aktivierten Zustand des größeren Bereichs versetzt wurde, wenn $\Sigma$Wh $\geq$ K2,

wobei die Sensorelementaktivierungsbestimmungsschaltung konfiguriert ist, um,

wenn bestimmt wird, dass das Sensorelement (10) in den aktivierten Zustand des engen Bereichs versetzt wurde, zu bestimmen, dass das Sensorelement (10) derart aktiviert ist, um die Ausgabe als eine Funktion des Istwerts der Konzentration der vorgegebenen Gaskomponente innerhalb des engen Bereichs korrekt zu erzeugen, und

wenn bestimmt wird, dass das Sensorelement (10) in den aktivierten Zustand des größeren Bereichs versetzt wurde, zu bestimmen, dass das Sensorelement (10) derart aktiviert ist, um die Ausgabe als Funktion des Istwerts der Konzentration der vorgegebenen Gaskomponente korrekt in einem größeren Bereich, der der vorgegebene messbare Bereich ist, zu erzeugen, und

wobei das Sensorelement (10) aus einem Laminat des Festelektrolytkörpers (11) und der Heizeinrichtung (18) besteht.

2. Gaskonzentrationsmessvorrichtung gemäß Anspruch 1, wobei die Sensorelementaktivierungsbestimmungsschaltung eine akkumulierte Menge der zu dem Heizgerät (18) zugeführten elektrischen Energie bestimmt, seit die Heizeinrichtungssteuerung (20) die Heizeinrichtung (18) aus einem kalten Zustand als die in den Sensor eingegebenen Energiemenge mit Energie beaufschlagt hat, wobei die Sensorelementaktivierungsbestimmungsschaltung bestimmt, ob das Sensorelement (10) in den aktivierten Zustand des engen Bereichs versetzt wurde oder nicht, basierend auf der akkumulierten Menge an elektrischer Energie.

3. Gaskonzentrationsmessvorrichtung gemäß Anspruch 1, wobei die Gaskonzentrationsbestimmungsschaltung ein Luft-Kraftstoff-Verhältnis der Maschine basierend auf der Konzentration der vorgegebenen Gaskomponente bestimmt, wobei der aktivierte Zustand des engen Bereichs ein aktivierter Zustand des stöchiometrischen A/F-Verhältnisses ist, der ein Zustand ist, in dem das Sensorelement derart aktiviert ist, um die Ausgabe als eine Funktion eines Luft-Kraftstoff-Verhältnisses des Motors innerhalb des engen Bereichs zu erzeugen, der um ein stöchiometrisches Luft-Kraftstoff-Verhältnis definiert ist, und wobei die Sensorelementaktivierungsbestimmungsschaltung basierend auf der in den Sensor eingegebenen Energiemenge bestimmt, ob das Sensorelement in den aktivierten Zustand des stöchiometrischen A/F-Verhältnisses versetzt wurde oder nicht.

4. Gaskonzentrationsmessvorrichtung gemäß Anspruch 1, wobei die Sensorelementaktivierungsbestimmungsschaltung ebenso bestimmt, ob die Maschine neu gestartet wurde, bevor diese in einen kalten Zustand versetzt wurde oder nicht, und wobei, wenn bestimmt wird, dass die Maschine neu gestartet wurde, die Sensorelementaktivierungsbestimmungsschaltung ein Kriterium ändert, das im Vergleich mit der Menge der in den Sensor eingeleiteten Energie verwendet wird, um zu bestimmen, ob das Sensorelement (10) in den aktivierten Zustand des engen Bereichs versetzt wurde oder nicht.

5. Gaskonzentrationsmessvorrichtung gemäß Anspruch 1, wobei die Sensorelementaktivierungsbestimmungsschaltung fungiert um zu bestimmen, ob die Maschine neu gestartet wurde, bevor diese in einen kalten Zustand versetzt wurde oder nicht, und ebenso um eine Sensorelementimpedanz zu messen, die eine Impedanz des Sensorelements (10) ist, und wobei, wenn bestimmt wird, dass die Maschine neu gestartet wurde, die Sensorelementaktivierungsbestimmungsschaltung basierend auf der Sensorelementimpedanz bestimmt, ob das Sensorelement (10) in den aktivierten Zustand des engen Bereichs versetzt wurde oder nicht, wenn bestimmt wird, dass die Maschine nicht neu gestartet wurde, wobei die Sensorelementaktivierungsbestimmungsschaltung basierend auf der Menge der in den Sensor eingegebenen Energie bestimmt, ob das Sensorelement (10) in den aktivierten Zustand des engen Bereichs versetzt wurde oder nicht.

**6.** Gaskonzentrationsmessvorrichtung gemäß Anspruch 1, wobei die Sensorelementaktivierungsbestimmungsschaltung ferner eine Spannung abtastet, die durch eine Energieversorgung mit der Funktion zum Zuführen elektrischer Energie über die Heizeinrichtungssteuerungsvorrichtung (20) an die Heizeinrichtung (18) entwickelt wird, und wobei die Sensorelementaktivierungsbestimmungsschaltung ebenso fungiert, um ein Kriterium zu ändern, das im Vergleich mit der in den Sensor eingegebenen Energiemenge verwendet wird, um zu bestimmen, ob das Sensorelement (10) in den aktivierten Zustand des engen Bereichs versetzt wurde oder nicht, basierend auf der abgetasteten Spannung.

**Revendications**

**1.** Appareil de mesure de concentration de gaz ayant un capteur de gaz qui est installable dans un système d'échappement d'un moteur à combustion interne pour mesurer la concentration du composant gazeux donné qui est l'un de l'oxygène et d'un autre composant gazeux contenu dans le gaz d'échappement émis par le moteur, et étant conçu pour échantillonner une sortie du capteur de gaz qui inclut un élément de capteur (10) constitué d'un corps d'électrolyte solide (11) ayant pour fonction de produire la sortie sous la forme d'un signal électrique en fonction de la concentration d'un composant gazeux donné à l'intérieur d'une plage mesurable donnée, comprenant :

un dispositif de chauffage (18) conçu pour être alimenté en énergie électrique pour chauffer l'élément de capteur ;
un dispositif de commande de dispositif de chauffage (20) ayant pour fonction de commander une fourniture de l'énergie électrique audit dispositif de chauffage pour chauffer l'élément de capteur (10) jusqu'à une température souhaitée à laquelle l'élément de capteur (10) est activé ; et
un circuit de détermination de concentration de gaz conçu pour échantillonner la sortie, telle que produite par l'élément de capteur (10) du capteur de gaz, pour déterminer les concentrations du composant gazeux donné, **caractérisé par**
un circuit de détermination d'activation d'élément de capteur ayant pour fonction de déterminer une quantité d'énergie entrée dans le capteur ($\sum$ Wh) qui est une quantité d'énergie entrée dans l'élément de capteur (10) par la chaleur produite par ledit dispositif de chauffage (18), ledit circuit de détermination d'activation d'élément de capteur ayant également pour fonction de déterminer sur la base de la quantité d'énergie entrée dans le capteur si l'élément de capteur (10) a été placé dans un état activé ou non d'une plage étroite définie à l'intérieur de la plage mesurable donnée, par comparaison d'un premier critère (K1) et d'un second critère (K2) avec la quantité d'énergie entrée dans le capteur ($\sum$ Wh), dans lequel
il est déterminé que l'élément de capteur (10) a été placé dans l'état activé de la plage étroite lorsque K1 $\leq$ $\sum$Wh < K2, et
il est déterminé que l'élément de capteur (10) a été placé dans l'état activé de la plage plus large lorsque $\sum$Wh $\geq$ K2,
dans lequel le circuit de détermination d'activation d'élément de capteur est configuré pour,
lorsqu'il est déterminé que l'élément de capteur (10) a été placé dans l'état activé de la plage étroite, déterminer que l'élément de capteur (10) est activé de façon à produire la sortie en fonction d'une valeur réelle de la concentration du composant gazeux donné correctement à l'intérieur de la plage étroite, et
lorsqu'il est déterminé que l'élément de capteur (10) a été placé dans l'état activé de la plage plus large, déterminer que l'élément de capteur (10) est activé de façon à produire la sortie en fonction d'une valeur réelle de la concentration du composant gazeux donné correctement à l'intérieur d'une plage plus large qui est la plage mesurable donnée, et
dans lequel l'élément de capteur (10) est constitué d'un stratifié du corps d'électrolyte solide (11) et du dispositif de chauffage (18).

**2.** Appareil de mesure de concentration de gaz selon la revendication 1, dans lequel ledit circuit de détermination d'activation d'élément de capteur détermine une quantité accumulée de l'énergie électrique fournie audit dispositif de chauffage (18) depuis que ledit dispositif de commande de dispositif de chauffage (20) a mis sous tension ledit dispositif de chauffage (18) dans un état froid en tant que quantité d'énergie entrée dans le capteur, ledit circuit de détermination d'activation d'élément de capteur déterminant si l'élément de capteur (10) a été placé dans l'état activé de la plage étroite ou non sur la base de la quantité accumulée de l'énergie électrique.

**3.** Appareil de mesure de concentration de gaz selon la revendication 1, dans lequel ledit circuit de détermination de concentration de gaz détermine un rapport air-carburant du moteur sur la base de la concentration du composant gazeux donné, dans lequel l'état activé de la plage étroite est un état activé de rapport A/C stoechiométrique qui est un état dans lequel l'élément de capteur est activé de façon à produire la sortie en fonction d'un rapport air-carburant du moteur à l'intérieur de la plage étroite définie autour d'un rapport air-carburant stoechiométrique, et dans lequel ledit circuit de détermination d'activation d'élément de capteur détermine sur la base de la quantité d'énergie entrée dans le capteur si l'élément de capteur a été placé dans l'état activé de rapport A/C stoechiométrique ou non.

4. Appareil de mesure de concentration de gaz selon la revendication 1, dans lequel ledit circuit de détermination d'activation d'élément de capteur détermine également si le moteur a été redémarré avant d'être placé dans un état froid ou non, et dans lequel lorsqu'il est déterminé que le moteur a été redémarré, ledit circuit de détermination d'activation d'élément de capteur modifie un critère utilisé dans la comparaison avec la quantité d'énergie entrée dans le capteur pour déterminer si l'élément de capteur (10) a été placé dans l'état activé de la plage étroite ou non.

5. Appareil de mesure de concentration de gaz selon la revendication 1, dans lequel ledit circuit de détermination d'activation d'élément de capteur a pour fonction de déterminer si le moteur a été redémarré avant d'être placé dans un état froid ou non et également de mesurer une impédance d'élément de capteur qui est une impédance de l'élément de capteur (10), et dans lequel lorsqu'il est déterminé que le moteur a été redémarré, ledit circuit de détermination d'activation d'élément de capteur détermine sur la base de l'impédance d'élément de capteur si l'élément de capteur (10) a été placé dans l'état activé de la plage étroite ou non, lorsqu'il est déterminé que le moteur n'a pas été redémarré, ledit circuit de détermination d'activation d'élément de capteur déterminant sur la base de la quantité d'énergie entrée dans le capteur si l'élément de capteur (10) a été placé dans l'état activé de la plage étroite ou non.

6. Appareil de mesure de concentration de gaz selon la revendication 1, dans lequel ledit circuit de détermination d'activation d'élément de capteur échantillonne également une tension développée par une alimentation électrique ayant pour fonction de fournir l'énergie électrique audit dispositif de chauffage (18) à travers ledit dispositif de commande de dispositif de chauffage (20), et dans lequel ledit circuit de détermination d'activation d'élément de capteur a également pour fonction de modifier un critère utilisé dans la comparaison avec la quantité d'énergie entrée dans le capteur pour déterminer si l'élément de capteur (10) a été placé dans l'état activé de la plage étroite ou non sur la base de la tension échantillonnée.

Fig. 1

EP 1 744 154 B1

10

15  16

13

12

11

Vp

14

18

17

*Fig. 2*

Ip (mA)

RG

Ri

0

Vp (V)

*Fig. 3*

Fig 4(a)

Fig.4(b)

Time [sec.]

Fig. 5

Fig. 6(a)  Zac

Fig. 6(b)  A/F

Fig. 6(c)  Accumulated amount of heater power

Time [sec.]

Fig. 7

Fig. 8

10

12(13)
11
14

17

Fig. 9

Fig. 10(a)

Fig. 10(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002005882 A
- US 6314790 B1
- US 6429410 B1
- EP 987546 A2
- US 6578563 B2
- US 6295862 B1